# EUROPÄISCHE PATENTSCHRIFT

(11) **EP 3 408 451 B1**
(45) Veröffentlichungstag und Bekanntmachung des Hinweises auf die Patenterteilung: **30.10.2019**
(21) Anmeldenummer: 16829403.1
(22) Anmeldetag: 22.12.2016
(51) Int. Cl.: E01B 29/28, B25B 23/14

(54) **SCHRAUBMASCHINE**
SCREWING MACHINE
TIREFONNEUSE

(30) Priorität: 29.01.2016 DE 102016000968
(43) Veröffentlichungstag der Anmeldung: 05.12.2018
(73) Patentinhaber: Robel Bahnbaumaschinen GmbH, 83395 Freilassing (DE)
(72) Erfinder: WIDLROITHER, Otto, 83395 Freilassing (DE); KAMML, Dieter, 83404 Ainring (DE)
(86) Internationale Anmeldenummer: PCT/EP2016/002170
(87) Internationale Veröffentlichungsnummer: WO 2017/129213

(56) Entgegenhaltungen:
- EP-A2- 0 249 659
- DE-A1- 4 414 886
- JP-A- 2002 292 577

## Beschreibung

### Gebiet der Technik

Die Erfindung betrifft eine Schraubmaschine zum Anziehen bzw. Lösen von Schienenbefestigungsschrauben mit einem auf einem Gleis abrollbaren Maschinenrahmen, mit Handgriffen für ein Verschieben und mit einem Motor zur Beaufschlagung eines Schraubkopfes mit einem Drehmoment sowie mit einer Einrichtung zur Drehmomentbegrenzung. Zudem betrifft die Erfindung ein Verfahren zum Betreiben der Schraubmaschine.

### Stand der Technik

Aus der DE 10 2010 023 798 A1 ist eine Schraubmaschine bekannt, die zum Aufbringen eines begrenzten Drehmoments einen Servoschrauber umfasst. Ein mit einem Datenspeicher ausgestatteter Prozessor ist mit einem Drehwinkelmesser sowie mit einem Drehmomentgeber verbunden, um ein Soll-Drehmoment vorzugeben, mit dem eine Schraubverbindung angezogen werden soll.

Bei einem derartigen Servoschrauber ist eine Drehmoment-Messwelle direkt in einer Spindel des Schraubers integriert. Das bedingt eine aufwändige Lagerung und verlängert die Spindel, wodurch sich der konstruktive Aufbau der Schraubmaschine aufwendig gestaltet. Zudem ist ein Servoschrauber empfindlich gegenüber mechanischen Beschädigungen.

Die WO 2006/058552 A1 offenbart eine mechanische Schraubmaschine, bei der mittels einer elektromagnetisch schaltbaren Reibkupplung eine Drehmomentbegrenzung einstellbar ist. Aufgrund des Verschleißes und der Massenträgheit der mechanischen Komponenten kommt es dabei zu Ungenauigkeiten, die nicht vernachlässigbar sind.

Eine Schraubmaschine mit einem alternativen Antriebssystem ist aus der DE 44 14 886 A1 bekannt. Zusätzlich zu einem mechanischen Antrieb ist ein hydraulischer Antrieb vorgesehen, um eine vorgeschraubte Schraubverbindung mit einem vorgegebenen Drehmoment anzuziehen. Dabei wird ein Hydraulikdruck als Referenz für ein Anziehmoment herangezogene. Ungenauigkeiten sind hierbei durch die bestehende Temperatur- und Viskositätsabhängigkeit bedingt.

### Zusammenfassung der Erfindung

Der Erfindung liegt die Aufgabe zugrunde, für eine Schraubmaschine der eingangs genannten Art eine Verbesserung gegenüber dem Stand der Technik anzugeben. Beabsichtigt sind insbesondere ein einfacher Aufbau und eine hohe Genauigkeit. Zudem soll ein entsprechendes Verfahren dargelegt werden.

Erfindungsgemäß wird diese Aufgabe gelöst durch eine Schraubmaschine gemäß unabhängigem Anspruch 1 und ein Verfahren gemäß unabhängigem Anspruch 12. Abhängige Ansprüche geben vorteilhafte Ausgestaltungen der Erfindung an.

Konkret ist eine Messeinrichtung zur Erfassung eines Reaktionsmoments des Motors gegenüber dem Maschinenrahmen angeordnet, wobei der Motor zur Begrenzung des Drehmoments in Abhängigkeit des Reaktionsmoments angesteuert ist. Als Referenzgröße wird das Reaktionsmoment herangezogen, das vom Motor auf den Maschinenrahmen wirkt und mittels einer einfachen Messeinrichtung mit hoher Genauigkeit feststellbar ist. Damit sind einerseits ein einfacher und robuster Aufbau und andererseits eine genaue Drehzahlbegrenzung realisiert.

In einer vorteilhaften Ausgestaltung der Erfindung umfasst die Messeinrichtung einen Kraftaufnehmer zur Messung einer auf den Motor wirkenden Kraft. Hier wird nicht direkt das Reaktionsmoment gemessen, sondern eine Kraft, die der Maschinenrahmen auf den Motor ausübt. Die Kraft verhindert dabei eine Bewegung des Motors gegenüber dem Maschinenrahmen. Zwischen der Kraft und dem Reaktionsmoment besteht ein proportionales Verhältnis, das über die Geometrie einer vorliegenden Motoraufhängung eindeutig festgelegt ist.

Günstigerweise ist der Motor ein Hydraulikmotor oder ein Elektromotor, wodurch bei geringer Baugröße ein hohes Drehmoment nutzbar ist. Außerdem ist ein Hydraulikmotor aufgrund seiner robusten und wartungsarmen Bauweise sehr gut für die anspruchsvollen Bedingungen auf Gleisbaustellen geeignet. Ein Elektromotor ist darüber hinaus einfach zu regeln und ermöglicht das Betreiben der Schraubmaschine mittels Akkumulator als elektrische Maschine oder als Hybridmaschine. Diese Vorteile werden entsprechend der vorliegenden Erfindung mit einer sehr genauen Drehmomentbegrenzung kombiniert.

Ein einfacher vorteilhafter Aufbau der Schraubmaschine zeichnet sich dadurch aus, dass eine Steuerung vorgesehen ist, der ein zum Reaktionsmoment proportionaler Messwert zugeführt ist und dass die Steuerung zur Ansteuerung des Motors in Abhängigkeit des Messwertes eingerichtet ist.

Des Weiteren ist es von Vorteil, wenn der Schraubkopf drehschlüssig an eine Antriebswelle des Motors angeschlossen ist. Zwischen diesen beiden Komponenten sind keine Übertragungseinrichtungen wie Kupplungen oder Getriebe vorgesehen, wodurch eine direkte und verlustfreie Drehmomentübertragung zwischen Motor und Schraubkopf sichergestellt ist. Das Fehlen dämpfender oder elastischer Übertragungseinrichtungen bewirkt, dass das mittels des Schraubkopfs auf eine Schraube aufbringbare Drehmoment mit hoher Genauigkeit aus dem Reaktionsmoment des Motors ableitbar ist.

In einer vorteilhaften Ausgestaltung ist der Motor am Maschinenrahmen um eine vorgegebene Achse drehbar gelagert. Mittels dieser vorgegebenen Achse ist das resultierende Reaktionsmoment einfach bestimmbar.

Dabei ist es von Vorteil, wenn der Motor um eine Wellenachse des Motors drehbar gelagert ist. Auf diese Weise sind der Motor und der Schraubkopf um dieselbe Achse drehbar angeordnet. Der Motor ist gegen eine Drehung abgestützt, wobei ein Abstützmoment oder eine Abstützkraft zur Erfassung des Reaktionsmoments gemessen wird. Es müssen keine Hebeleffekte berücksichtigt werden und das ermittelte Reaktionsmoment entspricht genau dem mittels des Schraubkopfs aufbringbaren Drehmoment mit umgekehrtem Vorzeichen.

Günstigerweise ist der Motor mittels eines Wälzlagers am Maschinenrahmen gelagert. Damit werden Reibungsverluste ausgeschlossen, die bei der Bestimmung des zu begrenzenden Drehmoments berücksichtigt werden müssten.

Ein konstruktiv einfacher Aufbau sieht vor, dass der Motor gegenüber dem Maschinenrahmen mittels einer Drehmomentstütze abgestützt ist und dass die Messeinrichtung zur Erfassung einer mittels Drehmomentstütze aufgebrachten Stützkraft ausgebildet ist. In der Drehmomentstütze wirkt die gesamte Stützkraft, die eine Drehbewegung des Motors gegenüber dem Maschinenrahmen blockiert. Auf diese Weise reicht ein einzelner Sensor aus, um das Reaktionsmoment zu erfassen.

Für eine kompakte Bauweise der Schraubmaschine ist es günstig, wenn die Messeinrichtung in der Drehmomentstütze integriert ist. Zudem wirkt in einer stabförmigen Drehmomentstütze, deren Enden gelenkig gelagert sind, eine reine Zug- oder Druckkraft, die auch mit einem einfachen Kraftaufnehmer sehr genau messbar ist.

Eine alternative Ausführungsform sieht vor, dass der Motor an einer Aufnahmevorrichtung des Maschinenrahmens befestigt ist und dass die Messeinrichtung insbesondere in die Aufnahmevorrichtung integriert ist. Bei einem beweglich befestigten Motor stützt sich dieser zumindest an einer Befestigungsstelle ab, wobei die Messeinrichtung eine in der Befestigungsstelle wirkende Kraft misst. Es kann auch günstig sein, eine fixe Befestigung des Motors vorzusehen und mittels der Messeinrichtung an einer Befestigungsstelle oder an mehreren Befestigungsstellen Kraftmessungen vorzunehmen, um damit das Reaktionsmoment des Motors zu erfassen.

Beim erfindungsgemäßen Verfahren wird der Schraubkopf mittels des Motors mit dem Drehmoment beaufschlagt, wobei mittels der Messeinrichtung das Reaktionsmoment des Motors gegenüber dem Maschinenrahmen erfasst wird und wobei der Motor zur Begrenzung des Drehmoments in Abhängigkeit des Reaktionsmoments angesteuert wird. Das am Schraubkopf wirkende Drehmoment ist auf diese Weise einfach einstellbar, wobei das erfasste Reaktionsmoment als Kennwert für das tatsächlich auftretende Drehmoment herangezogen wird.

Dabei ist es vorteilhaft, wenn zur Erfassung des Reaktionsmoments mittels eines Kraftaufnehmers ein Messwert für eine auf den Motor wirkende Kraft gemessen wird, wenn der Messwert einer Steuerung zugeführt wird und wenn die Steuerung den Motor in Abhängigkeit des Messwerts ansteuert. Es wird ein einziger Messwert herangezogen, um daraus das Reaktionsmoment zu ermitteln. Auf diese Weise ist die Steuerung mit einfachen Komponenten ausführbar und erfordert keine aufwändigen Rechenoperationen.

In einer einfachen Weiterbildung des Verfahrens wird der Steuerung ein einstellbarer Grenzwert vorgegeben, wobei der Motor deaktiviert wird, sobald der Messwert den Grenzwert erreicht. Es wird der Steuerung kein Drehmomentwert vorgegeben, sondern beispielsweise ein maximaler Wert für eine mittels Messeinrichtung gemessene Kraft, wobei zwischen Kraft und Drehmoment ein bekanntes Verhältnis besteht.

Des Weiteren ist es vorteilhaft, wenn die Steuerung einem hydraulischen Druckbegrenzungsventil einen Begrenzungswert vorgibt, wenn ein Hydraulikmotor bis zum Erreichen des Begrenzungswerts läuft, wenn das beim Anhalten des Hydraulikmotors erfasste Reaktionsmoment mit einem Sollmoment verglichen wird und wenn in Abhängigkeit dieses Vergleichs die Steuerung einen angepassten Begrenzungswert vorgibt. Der Hydraulikmotor wird hierbei iterativ in Abhängigkeit des Reaktionsmoments angesteuert. Während eines Anziehvorgangs einer Schienenbefestigungsschraube wird das tatsächlich aufgebrachte Drehmoment anhand des Reaktionsmoments ermittelt. Weicht es aufgrund einer Temperatur- oder Viskositätsänderung von einem Sollwert ab, wird durch die Steuerung der Begrenzungswert für den nächsten Anziehvorgang entsprechend angepasst. Auf diese Weise ist die ansonsten in einem Regelkreis störende Ansprechverzögerung beim Anhalten eines Hydraulikmotors vernachlässigbar.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:

- Fig. 1: Schraubmaschine auf einem Gleis
- Fig. 2: Detail A der Schraubmaschine in Schrägansicht
- Fig. 3: Detail A der Schraubmaschine in Draufsicht

### Beschreibung der Ausführungsformen

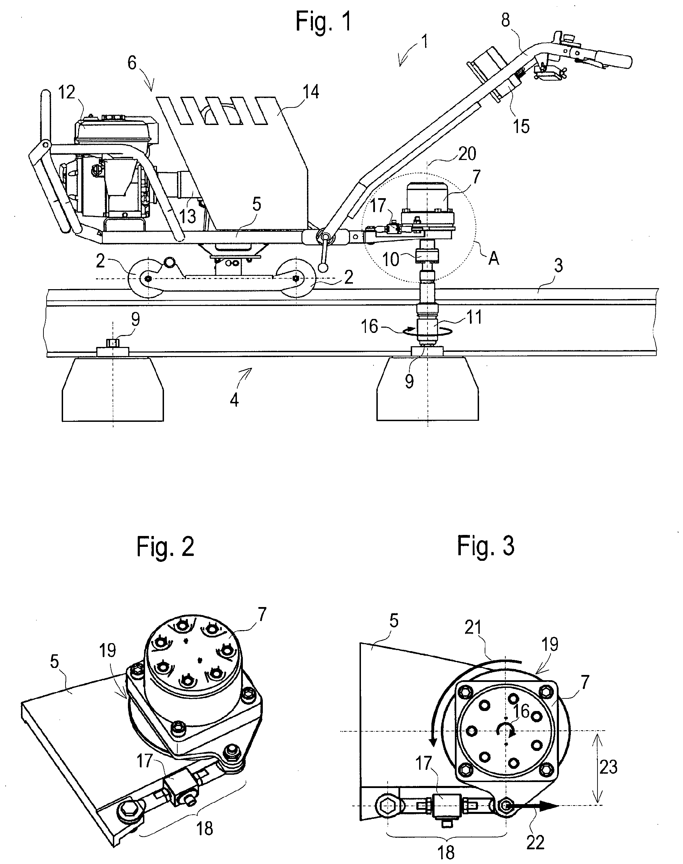

Eine in Fig. 1 dargestellte Schraubmaschine 1 weist einen mittels Rollen 2 auf einer Schiene 3 eines Gleises 4 verfahrbaren Maschinenrahmen 5 auf. An diesem ist ein Hydraulikaggregat 6 zur Erzeugung hydraulischen Drucks zur Versorgung eines Motors 7 befestigt. Zudem sind mit dem Maschinenrahmen 5 Handgriffe 8 zum Verschieben der Schraubmaschine 1 verbunden. Zum Anziehen und Lösen einer Schienenbefestigungsschraube 9 ist ein durch eine Antriebswelle 10 in Rotation versetzbarer Schraubkopf 11 vorgesehen.

Das Hydraulikaggregat 6 umfasst einen Verbrennungsmotor 12 und eine Hydraulikpumpe 13 und ist mittels einer Verkleidung 14 gegenüber einer Bedienperson abgeschirmt, um die Lärmbelastung zu begrenzen. Über nicht dargestellte Hydraulikleitungen ist der als Hydraulikmotor ausgebildete Motor 7 mit dem Hydraulikaggregat 6 verbunden.

Im Bereich der Handgriffe 8 ist eine Steuerung 15 angeordnet, mit Bedienelementen und Anzeigen zur Einstellung eines aufzubringenden Drehmoments 16. Die Steuerung 15 ist über nicht dargestellte Leitungen mit dem Motor 7 bzw. mit Ansteuerventilen des Motors 7 verbunden. Zudem sind Verbindungsleitungen zum Hydraulikaggregat 12 und zu einer Messeinrichtung 17 vorgesehen. Letztere ist im Ausführungsbeispiel in eine Drehmomentstütze 18 integriert.

Anhand der Fig. 2 und 3 wird die Funktionsweise der Messeinrichtung 17 näher erläutert. Der Motor 7 ist mittels eines Wälzlagers 19 gegenüber dem Maschinenrahmen 5 um eine Wellenachse 20 drehbar gelagert. Sobald der Schraubkopf 11 mittels des Motors 7 mit dem Drehmoment 16 beaufschlagt wird, wirkt auf den Maschinenrahmen 5 ein Reaktionsmoment 21. Konkret handelt es sich jeweils um ein Torsionsmoment, das an beiden Enden des Übertragungsstrangs zwischen Motor 7 und Schraubkopf 11 auftritt.

Erfasst wird das Reaktionsmoment 21 mittels der Messeinrichtung 17, die beispielsweise einen Kraftaufnehmer umfasst, der als Komponente der stabförmig ausgebildeten Drehmomentstütze 18 ausgebildet ist. Aufgrund der Abstützung des Motors 7 mittels der Drehmomentstütze 18 wirkt in der Drehmomentstütze 18 eine Stützkraft 22 in Längsrichtung. Eine Multiplikation dieser Stützkraft 22 mit einer Hebelarmdistanz 23 entspricht dem Reaktionsmoment 21. Über diesen Zusammenhang wird das Drehmoment 21 auf einfache und genaue Weise begrenzt.

Konkret erfolgt die Ansteuerung des als Hydraulikmotor ausgebildeten Motors 7 in der Weise, dass die Steuerung 15 einem hydraulischen Druckbegrenzungsventil einen Begrenzungswert vorgibt. Damit ist der Hydraulikdruck auf einen Wert begrenzt, der gemäß der Spezifikation des Hydraulikmotors das aufzubringende Drehmoment 16 bewirkt. Sobald während eines Anziehvorgangs der maximale Druck erreicht wird und der Hydraulikmotor stehen bleibt, wird das dabei erfasste Reaktionsmoment 21 herangezogen, um den Begrenzungswert anzupassen. Ist beispielsweise das aus dem erfassten Reaktionsmoment 21 abgeleitete Drehmoment 16 zu niedrig, wird dem Druckbegrenzungsventil für den nächsten Anziehvorgang ein höherer Begrenzungswert vorgegeben.

Von der Erfindung umfasst sind zudem diverse andere Ausführungsformen. Beispielsweise kann anstelle eines Hydraulikmotors ein Elektromotor mit einer entsprechenden elektrischen Versorgung vorgesehen sein. Anstelle eines Hydraulikaggregats 6 ist dann ein Generatorset am Maschinenrahmen 5 angeordnet. Die gute Regelbarkeit des Elektromotors erlaubt eine vereinfachte Motoransteuerung, wobei der mittels der Messeinrichtung 17 gemessenen Messwert der Steuerung 15 zugeführt und laufend mit einem Grenzwert verglichen wird. Dabei korrespondiert der Grenzwert mit dem vorgegebenen Drehmoment 16, mit dem die Schienenbefestigungsschraube 9 angezogen werden soll.

Der Grenzwert ist stufenlos oder mit einer vorgegebenen Skalierung einstellbar, um die Schraubmaschine 1 an die gegebenen Erfordernisse anzupassen. Zudem kann es sinnvoll sein, den Messwert laufend mit einem Schwellenwert zu vergleichen, der niedriger als der vorgegebene Grenzwert ist. Bei Erreichung dieses Schwellenwerts reduziert die Steuerung 15 die Drehzahl des Motors 7, um beim Aufbringen des maximalen Drehmoments 16 dynamische Effekte auszublenden.

In einer nicht dargestellten Ausprägung ist der Motor 7 fix oder beweglich mit einer Aufnahmevorrichtung verbunden, wobei die Messeinrichtung 17 in die Aufnahmevorrichtung integriert ist. Dabei kann auch vorgesehen sein, dass die Aufnahmevorrichtung gegenüber dem Maschinenrahmen 5 beweglich abgestützt ist und dass die auf die Aufnahmevorrichtung wirkenden Abstützkräfte oder Abstützmomente gemessen werden. Über eine bekannte Geometrie der Aufnahmevorrichtung lässt sich damit ohne weiteres das Reaktionsmoment 21 des Motors 7 bestimmen.

Die Abstützung des Motors 7 gegenüber dem Maschinenrahmen 5 ist auf vielfältige Weise realisierbar. Für die vorliegende Erfindung ist dabei entscheidend, dass mittels der Messeinrichtung 18 ein Messwert gemessen wird oder mehrere Messwerte gemessen werden, aus dem oder aus denen über die Geometrie der Abstützungsanordnung das Reaktionsmoment 21 des Motors 7 bestimmbar ist.

## Patentansprüche

1. Schraubmaschine (1) zum Anziehen bzw. Lösen von Schienenbefestigungsschrauben (9) mit einem auf einem Gleis (3) abrollbaren Maschinenrahmen (5), mit Handgriffen (8) für ein Verschieben und mit einem Motor (7) zur Beaufschlagung eines Schraubkopfes (11) mit einem Drehmoment (16) sowie mit einer Einrichtung zur Drehmomentbegrenzung, **dadurch gekennzeichnet, dass** eine Messeinrichtung (17) zur Erfassung eines Reaktionsmoments (21) des Motors (7) gegenüber dem Maschinenrahmen (5) angeordnet ist und dass der Motor (7) zur Begrenzung des Drehmoments (16) in Abhängigkeit des Reaktionsmoments (21) angesteuert ist.

2. Schraubmaschine (1) nach Anspruch 1, **dadurch gekennzeichnet, dass** die Messeinrichtung (17) einen Kraftaufnehmer zur Messung einer auf den Motor (7) wirkenden Kraft umfasst.

3. Schraubmaschine (1) nach Anspruch 1 oder 2, **dadurch gekennzeichnet, dass** der Motor (7) ein Hydraulikmotor oder ein Elektromotor ist.

4. Schraubmaschine (1) nach einem der Ansprüche 1 bis 3, **dadurch gekennzeichnet, dass** eine Steuerung (15) vorgesehen ist, der ein zum Reaktionsmoment (21) proportionaler Messwert zugeführt ist und dass die Steuerung (15) zur Ansteuerung des Motors (7) in Abhängigkeit des Messwertes eingerichtet ist.

5. Schraubmaschine (1) nach einem der Ansprüche 1 bis 4, **dadurch gekennzeichnet, dass** der Schraubkopf (11) drehschlüssig an eine Antriebswelle (10) des Motors (7) angeschlossen ist.

6. Schraubmaschine (1) nach einem der Ansprüche 1 bis 5, **dadurch gekennzeichnet, dass** der Motor (7) am Maschinenrahmen (5) um eine vorgegebene Achse drehbar gelagert ist.

7. Schraubmaschine (1) nach Anspruch 6, **dadurch gekennzeichnet, dass** der Motor (7) um eine Wellenachse (20) des Motors (7) drehbar gelagert ist.

8. Schraubmaschine (1) nach Anspruch 6 oder 7, **dadurch gekennzeichnet, dass** der Motor (7) mittels eines Wälzlagers (19) am Maschinenrahmen (5) gelagert ist.

9. Schraubmaschine (1) nach einem der Ansprüche 6 bis 8, **dadurch gekennzeichnet, dass** der Motor (7) gegenüber dem Maschinenrahmen (5) mittels einer Drehmomentstütze (18) abgestützt ist und dass die Messeinrichtung (17) zur Erfassung einer mittels Drehmomentstütze (17) aufgebrachten Stützkraft (22) ausgebildet ist.

10. Schraubmaschine (1) nach Anspruch 9, **dadurch gekennzeichnet, dass** die Messeinrichtung (17) in der Drehmomentstütze (18) integriert ist.

11. Schraubmaschine (1) nach einem der Ansprüche 1 bis 5, **dadurch gekennzeichnet, dass** der Motor (7) an einer Aufnahmevorrichtung des Maschinenrahmens (5) befestigt ist und dass die Messeinrichtung (7) insbesondere in die Aufnahmevorrichtung integriert ist.

12. Verfahren zum Betreiben einer Schraubmaschine (1) nach einem der Ansprüche 1 bis 11, wobei der Schraubkopf (11) mittels des Motors (7) mit dem Drehmoment (16) beaufschlagt wird, **dadurch gekennzeichnet, dass** mittels der Messeinrichtung (17) das Reaktionsmoment (21) des Motors (7) gegenüber dem Maschinenrahmen (5) erfasst wird und dass der Motor (7) zur Begrenzung des Drehmoments (16) in Abhängigkeit des Reaktionsmoments (21) angesteuert wird.

13. Verfahren nach Anspruch 12, **dadurch gekennzeichnet, dass** zur Erfassung des Reaktionsmoments (21) mittels eines Kraftaufnehmers ein Messwert für eine auf den Motor (7) wirkende Kraft gemessen wird, dass der Messwert einer Steuerung (15) zugeführt wird und dass die Steuerung (15) den Motor (7) in Abhängigkeit des Messwerts ansteuert.

14. Verfahren nach Anspruch 13, **dadurch gekennzeichnet, dass** der Steuerung (15) ein einstellbarer Grenzwert vorgegeben wird und dass der Motor (7) deaktiviert wird, sobald der Messwert den Grenzwert erreicht.

15. Verfahren nach Anspruch 12 oder 13, **dadurch gekennzeichnet, dass** die Steuerung (15) einem hydraulischen Druckbegrenzungsventil einen Begrenzungswert vorgibt, dass ein Hydraulikmotor bis zum Erreichen des Begrenzungswerts läuft, dass das beim Anhalten des Hydraulikmotors erfasste Reaktionsmoment mit einem Sollmoment verglichen wird und dass in Abhängigkeit dieses Vergleichs die Steuerung (15) einen angepassten Begrenzungswert vorgibt.

## Claims

1. Screwing machine (1) for tightening or loosening rail fitting screws (9) with a machine frame (5) that can be rolled along a track (3), with handles (8) for shunting and with a motor (7) for applying torque (16) to a screw head (11) as well as with a means for torque limitation, **characterised in that** a measuring means (17) for recording a reaction moment (21) of the motor (7) in relation to the machine frame (5) is arranged, and **in that** the motor (7) is controlled for limiting the torque (16) depending on the reaction moment (21).

2. Screwing machine (1) according to claim 1, **characterised in that** the measuring means (17) comprises a load cell for measuring a force acting on the motor (7).

3. Screwing machine (1) according to claim 1 or 2, **characterised in that** the motor (7) is a hydraulic motor or an electric motor.

4. Screwing machine (1) according to one of the claims 1 to 3, **characterised in that** a controller (15) is envisaged, which is supplied with a measurement value proportional to the reaction moment (21), and **in that** the controller (15) is equipped for controlling the motor (7) depending on the measurement value.

5. Screwing machine (1) according to one of the claims 1 to 4, **characterised in that** the screw head (11) is connected with a drive shaft (10) of the motor (7) in a rotationally locked way.

6. Screwing machine (1) according to one of the claims 1 to 5, **characterised in that** the motor (7) is mounted on the machine frame (5) for rotation around a predetermined axis.

7. Screwing machine (1) according to claim 6, **characterised in that** the motor (7) is mounted for rotation around a shaft axis (20) of the motor (7).

8. Screwing machine (1) according to claim 6 or 7, **characterised in that** the motor (7) is mounted on the machine frame (5) by means of a roller bearing (19).

9. Screwing machine (1) according to one of the claims 6 to 8, **characterised in that** the motor (7) is supported in relation to the machine frame (5) by means of a torque support (18) and **in that** the measuring means (17) is designed for recording a supporting force (22) applied by means of a torque support (17).

10. Screwing machine (1) according to claim 9, **characterised in that** the measuring means (17) is integrated into the torque support (18).

11. Screwing machine (1) according to one of the claims 1 to 5, **characterised in that** the motor (7) is fitted to a receiving device of the machine frame (5) and **in that** the measuring means (7) in particular is integrated into the receiving device.

12. Method for operating a screwing machine (1) according to one of the claims 1 to 11, wherein the torque (16) is applied to the screw head (11) by means of the motor (7), **characterised in that** the reaction moment (21) of the motor (7) in relation to the machine frame (5) is recorded by means of the measuring means (17), and **in that** the motor (7) is controlled for limiting the torque (16) depending on the reaction moment (21).

13. Method according to claim 12, **characterised in that,** for recording the reaction moment (21), a measurement value for a force acting on the motor (7) is measured by means of a load cell, **in that** the measurement value is supplied to a controller (15), and **in that** the controller (15) controls the motor (7) depending on the measurement value.

14. Method according to claim 13, **characterised in that** the controller (15) is provided with an adjustable limit value and **in that** the motor (7) is deactivated as soon as the measurement value reaches the limit value.

15. Method according to claim 12 or 13, **characterised in that** the controller (15) provides a hydraulic pressure limitation valve with a limit value, **in that** a hydraulic motor runs until the limit value is reached, **in that** the reaction moment recorded when the hydraulic motor is stopped is compared with a target moment, and **in that** the controller (15) provides an adjusted limit value depending on this comparison.

## Revendications

1. Visseuse (1) pour le serrage ou desserrage de vis de fixation de rail (9) avec un châssis de machine (5) pouvant partir en dérive sur une voie ferrée (3), avec des poignées (8) pour un coulissement et avec un moteur (7) pour la sollicitation d'une tête de vis (11) avec un couple de rotation (16) ainsi qu'avec un dispositif pour la limitation de couple de rotation, **caractérisée en ce qu'**un dispositif de mesure (17) est disposé en face du châssis de machine (5) pour la détection d'un couple antagoniste (21) du moteur (7) et que le moteur (7) est commandé pour la limitation du couple de rotation (16) en fonction du couple antagoniste (21).

2. Visseuse (1) selon la revendication 1, **caractérisée en ce que** le dispositif de mesure (17) comprend un enregistreur de force pour la mesure d'une force agissant sur le moteur (7).

3. Visseuse (1) selon la revendication 1 ou 2, **caractérisée en ce que** le moteur (7) est un moteur hydraulique ou un moteur électrique.

4. Visseuse (1) selon une des revendications 1 à 3, **caractérisée en ce qu'**une commande (15) à laquelle est amenée une valeur de mesure proportionnelle au couple antagoniste (21) est prévue et que la commande (15) est configurée pour la commande du moteur (7) en fonction de la valeur de mesure.

5. Visseuse (1) selon une des revendications 1 à 4, **caractérisée en ce que** la tête de vis (11) est raccordée par accouplement rotatif à un arbre d'entraînement (10) du moteur (7).

6. Visseuse (1) selon une des revendications 1 à 5, **caractérisée en ce que** le moteur (7) est logé à rotation autour d'un axe prédéfini sur le châssis de machine (5).

7. Visseuse (1) selon la revendication 6, **caractérisée en ce que** le moteur (7) est logé à rotation autour d'un axe d'arbre (20) du moteur (7).

8. Visseuse (1) selon la revendication 6 ou 7, **caractérisée en ce que** le moteur (7) est logé au moyen d'un palier à roulement (19) sur le châssis de machine (5).

9. Visseuse (1) selon une des revendications 6 à 8, **caractérisée en ce que** le moteur (7) est appuyé en face du châssis de machine (5) au moyen d'un support de couple de rotation (18) et que le dispositif de mesure (17) est réalisé pour la détection d'une force d'appui (22) appliquée au moyen du support de couple de rotation (17).

10. Visseuse (1) selon la revendication 9, **caractérisée en ce que** le dispositif de mesure (17) est intégré dans le support de couple de rotation (18).

11. Visseuse (1) selon une des revendications 1 à 5, **caractérisée en ce que** le moteur (7) est fixé à un dispositif de réception du châssis de machine (5) et que le dispositif de mesure (7) est notamment intégré dans le dispositif de réception.

12. Procédé d'exploitation d'une visseuse (1) selon une des revendications 1 à 11, dans lequel la tête de vis (11) est sollicitée avec le couple de rotation (16) au moyen du moteur (7), **caractérisé en ce que** le couple antagoniste (21) du moteur (7) par rapport au châssis de machine (5) est détecté au moyen du dispositif de mesure (17) et que le moteur (7) est commandé pour la limitation du couple de rotation (16) en fonction du couple antagoniste (21).

13. Procédé selon la revendication 12, **caractérisé en ce que** pour la détection du couple antagoniste (21), une valeur de mesure pour une force agissant sur le moteur (7) est mesurée au moyen d'un enregistreur de force, que la valeur de mesure est amenée à une commande (15) et que la commande (15) commande le moteur (7) en fonction de la valeur de mesure.

14. Procédé selon la revendication 13, **caractérisé en ce qu'**une valeur limite réglable est prédéfinie à la commande (15) et que le moteur (7) est désactivé dès que la valeur de mesure atteint la valeur limite.

15. Procédé selon la revendication 12 ou 13, **caractérisé en ce que** la commande (15) prédéfinit une valeur de limitation à une soupape de limitation de pression hydraulique, qu'un moteur hydraulique tourne jusqu'à atteindre la valeur de limitation, que le couple antagoniste détecté lors de l'arrêt du moteur hydraulique est comparé à un couple de consigne et que la commande (15) prédéfinit une valeur de limitation adaptée en fonction de cette comparaison.
